# DEMANDE DE BREVET EUROPEEN

(11) **EP 2 020 528 A1**
(43) Date de publication de la demande: **04.02.2009**
(21) Numéro de dépôt: 08300233.7
(22) Date de dépôt: 07.07.2008
(51) Int. Cl.: F16F 9/38, F16F 9/58

(54) **Dispositif de butée de limitation de course d'une suspension de véhicule, en particulier dans un amortisseur, et système de suspension incluant un tel dispositif**

(30) Priorité: 23.07.2007 FR 0756672
(71) Demandeur: Peugeot Citroën Automobiles S.A., 78140 Vélizy Villacoublay (FR); Trelleborg Modyn, 44470 Carquefou (FR)
(72) Inventeur: Lizot, Arnaud, 92600 Asniere sur Seine (FR); Kieffer, Jérôme, 44300 Nantes (FR)
(74) Mandataire: Thinat, Michel

(57) **Abrégé**

Le Dispositif de butée de limitation de course (1) s'applique à une suspension de véhicule. La suspension comporte un amortisseur (9), qui comprend une tige (92), montée coulissante dans un corps d'amortisseur (91). Le dispositif de butée est constitué par une pièce unique, de révolution, comprenant :
- une partie d'extrémité supérieure (4) destinée à être fixée à un appui supérieur (7) de la tige (92),
- une partie de butée (2) composée d'une succession de plis (20) , agencés de façon à pouvoir fonctionner en compression pour assurer une fonction de butée d'attaque et en traction pour assurer une fonction de butée de détente,
- une partie de protection (3) agencée de façon à permettre à la tige (92) de coulisser avant de faire fonctionner la partie de butée (2) en traction ou en compression,, et
- une partie d'extrémité inférieure (35) destinée à être liée au corps d'amortisseur (91) et à fournir une fixation à ladite pièce unique de façon à permettre la fonction de butée de détente.

Véhicules automobiles. Systèmes de suspension des véhicules automobiles.

## Description

La présente invention concerne un dispositif de butée de limitation de course d'une suspension de véhicule, en particulier dans un amortisseur. Elle concerne également un système de suspension de véhicule, notamment de véhicule automobile, incluant un tel dispositif.

Un système de suspension de véhicule comprend, de façon conventionnelle, un amortisseur composé d'une tige vérin liée au châssis du véhicule et d'un cylindre d'amortisseur constitué par le corps d'amortisseur lié à un support de la fusée de roue.

De manière classique, une butée de limitation de course fonctionne :
- uniquement lors d'une phase d'attaque (dite aussi phase de compression) de l'amortisseur, c'est-à-dire lorsque la tige d'amortisseur s'enfonce dans le corps d'amortisseur ; ou
- uniquement lors d'une phase de détente de l'amortisseur, c'est-à-dire lorsque la tige d'amortisseur sort du corps d'amortisseur.

Une butée dite d'attaque, en matière élastomère le plus souvent, est généralement interposée, autour de la tige d'amortisseur, entre le châssis et le corps d'amortisseur. Lorsque le véhicule est en phase de réception d'une bosse, la tige d'amortisseur s'enfonce à haute vitesse dans le corps d'amortisseur jusqu'à atteindre, dans certains cas, le maximum de sa course. Cette butée de limitation de course est alors comprimée par le corps d'amortisseur, s'écrase en absorbant de l'énergie et évite un choc brutal. La présence d'une telle butée permet d'éviter à l'amortisseur de « talonner » brutalement.

Il est ainsi connu, par le document FR 2 747 754, un dispositif de butée d'attaque, qui comporte au moins un élément élastique de compression traversé par une tige liée, à une extrémité, à un bâti par rapport auquel la butée est maintenue par un appui, tandis que du côté de son autre extrémité la tige peut coulisser dans un cylindre relié à un organe susceptible de se déplacer relativement au bâti. Une extrémité d'un soufflet protecteur est liée à la butée, et l'autre extrémité du soufflet peut être entraînée par le cylindre lors des débattements afin de rester autour de la tige. La butée limite la course du cylindre en direction du bâti et exerce une force de réaction sur ce cylindre en fin de course. L'effort de compression de la butée, en fin de course, est transmis du cylindre à la butée par l'intermédiaire du soufflet.

Toutefois, un tel dispositif de butée ne fonctionne que lors d'une phase d'attaque, c'est-à-dire, comme déjà évoqué précédemment, lorsque la tige d'amortisseur s'enfonce dans le corps d'amortisseur. Il ne fonctionne pas en phase de détente (tige d'amortisseur qui sort du corps d'amortisseur).

Dans une telle suspension, il est ainsi d'usage de rajouter un dispositif de butée de détente en complément du dispositif de butée d'attaque.

Une butée dite de détente est ainsi une pièce distincte de la butée d'attaque, qui est généralement réalisé au moyen d'un élément élastique, par exemple un ressort ou un tampon en matière élastomère, disposé à l'intérieur du corps d'amortisseur, autour de la tige. Une telle butée présente l'inconvénient de nécessiter une augmentation de la longueur du corps d'amortisseur pour pouvoir la disposer à l'intérieur, et ne permet généralement pas un amortissement progressif de l'amortisseur en phase de détente.

Le but de la présente invention est de pallier ces inconvénients de l'art antérieur en proposant un dispositif de butée de limitation de course d'une suspension, qui fonctionne à la fois en phase de détente et en phase de compression, par conséquent un dispositif ayant à la fois une fonction de butée d'attaque et une fonction de butée de détente.

Un autre but de la présente invention est de fournir un tel dispositif, qui remplisse également une fonction de protection de la tige vérin d'amortisseur, par conséquent qui remplisse à l'aide d'une seule pièce les fonctions des trois éléments suivants : butée d'attaque, butée de détente et protecteur de tige d'amortisseur.

Un autre but de la présente invention est de fournir un tel dispositif, dans lequel la fonction de butée de détente présente une excellente progressivité, et par conséquent un bon « ressenti » par le conducteur.

Un autre but de la présente invention est de fournir un nouveau système de suspension incluant le nouveau dispositif de butée de limitation de course et de protection de la tige d'amortisseur.

Enfin, c'est également un but de la présente invention de fournir un tel dispositif de butée et un tel système de suspension, qui soient de conception simple et de réalisation aisée, par conséquent économiques, et qui soient robustes et fiables.

Pour parvenir à ces buts, la présente invention conçoit un nouveau dispositif de butée de limitation de course d'une suspension de véhicule, ladite suspension comportant un amortisseur qui comprend une tige montée coulissante dans un corps d'amortisseur. Ce nouveau dispositif est constitué par une pièce unique, de révolution, qui comprend :
- une partie d'extrémité supérieure destinée à être fixée à un appui supérieur de la tige,
- une partie de butée composée d'une succession de plis, agencés de façon à pouvoir fonctionner en compression pour assurer une fonction de butée d'attaque et en traction pour assurer une fonction de butée de détente,
- une partie de protection agencée de façon à permettre à la tige de coulisser avant de faire fonctionner la partie de butée en traction ou en compression, et
- une partie d'extrémité inférieure destinée à être liée au corps d'amortisseur et à fournir une fixation à ladite pièce unique de façon à permettre la fonction de butée de détente.

Selon un mode préféré de réalisation de l'invention, les plis de la partie de butée présentent, en coupe longitudinale, une forme générale de « U ».

De préférence, l'épaisseur des plis de la partie de butée décroît d'une extrémité à l'autre de la partie de butée.

De préférence également, la forme des plis de la partie de butée varie d'une extrémité à l'autre de la partie de butée.

Le matériau qui compose le dispositif est, de préférence, un élastomère thermoplastique.

Ce matériau peut présenter une dureté « shore » comprise entre 30D et 80D.

Le dispositif de l'invention peut être obtenu par un procédé de moulage, ou par un procédé de type extrusion/soufflage ou un procédé de type injection/soufflage.

Selon un mode préféré de réalisation de l'invention également, la partie inférieure est de forme cylindrique afin de pouvoir coulisser sur la paroi externe du corps d'amortisseur et présente une butée de limitation de la course de coulissement en détente.

De préférence, cette butée de limitation de la course de coulissement est formée par un rebord radial interne de l'extrémité de la partie inférieure qui est destinée à venir en butée contre un arrêtoir monté fixe sur le corps d'amortisseur.

Ce rebord radial interne présente, de préférence, une section conique, de manière à assurer le montage sur le corps d'amortisseur lors de la première compression et éviter le déboîtement de la partie inférieure en détente.

De manière préférentielle, le dispositif selon l'invention comprend en outre une partie formant soufflet, disposé entre la partie supérieure et la partie de butée, afin d'assurer une fonction de protection de la tige d'amortisseur.

De préférence, le soufflet est composé d'une succession de plis et présente une raideur en traction et en compression inférieure à celles de la partie de butée.

Les plis du soufflet présentent, en coupe longitudinale, de préférence, une forme générale de « V » ou de créneau.

L'épaisseur des plis du soufflet est, de préférence, inférieure à l'épaisseur des plis de la partie de butée.

Les plis du soufflet sont, de préférence également, de faible épaisseur, de façon à obtenir une raideur faible sur les petits déplacements du soufflet. Toutefois, les sommets et les pieds de ces plis du soufflet peuvent être relativement épais pour éviter la déformation des spires lors des sollicitations en traction.

La partie inférieure du dispositif de l'invention présente une forme cylindrique destinée à être engagée et fixée solidairement sur le corps d'amortisseur.

La partie supérieure du dispositif de l'invention est destinée à être solidairement fixée sur l'appui supérieur de la tige de l'amortisseur.

La présente invention concerne aussi un nouveau système de suspension comprenant un amortisseur composé d'un corps d'amortisseur, dans lequel coulisse une tige d'amortisseur, et d'un ressort de suspension monté autour dudit amortisseur. Ce nouveau système comprend, de plus, un dispositif de butée de limitation de course conforme à celui décrit ci-dessus dans ses grandes lignes.

Selon un mode préféré de réalisation d'un tel système, le dispositif de butée de limitation de course est placé partiellement autour du corps d'amortisseur, de façon que la cote écrasée du dispositif de butée (1) n'intervienne pas dans l'empilage appui supérieur (7) /ressort de suspension (6) / amortisseur (9).

De préférence, dans ce système de suspension de l'invention, les parties supérieure et inférieure du dispositif de butée présentent chacune à leur extrémité libre une collerette en saillie radiale, en appui respectivement sur l'appui supérieur et le corps d'amortisseur, et le ressort est monté entre les deux collerettes de sorte que le dispositif de butée filtre les vibrations du ressort.

Le système selon l'invention peut comporter un support intermédiaire pour ajuster la différence de hauteur entre le ressort d'amortisseur et le dispositif de butée de limitation de course.

L'un des plis d'extrémité du soufflet peut prendre appui contre le support intermédiaire.

De manière similaire, l'un des plis d'extrémité de la partie de butée du dispositif de butée peut prendre appui contre ledit support intermédiaire.

Enfin, le soufflet peut être est placé à l'intérieur ou à l'extérieur dudit support intermédiaire.

D'autres buts, avantages et caractéristiques de l'invention apparaîtront dans la description qui suit de plusieurs modes de réalisation de l'invention, non limitatifs de l'objet et de la portée de la présente demande de brevet, accompagnée de dessins dans lesquels :
- la figure 1 est une vue frontale, en coupe longitudinale, d'un premier mode de réalisation du dispositif de butée de limitation de course d'une suspension, selon la présente invention,
- la figure 2 est une vue agrandie d'un mode de réalisation de la partie de liaison du dispositif formant butée de détente, selon la présente invention,
- la figure 3 représente, de manière schématique, un autre mode de réalisation avantageux de la partie de protection et de la partie de butée du dispositif selon la présente invention,
- les figures 4, 5 et 6 représentent un amortisseur, qui est pourvu d'un dispositif selon l'invention de butée de limitation de course, en position de détente, d'attaque et de repos, respectivement,
- la figure 7 représente une variante de réalisation du dispositif de l'invention, utilisé sur un combiné ressort amortisseur,
- la figure 8 représente une autre variante de réalisation du dispositif de l'invention,
- les figures 9 et 10 représentent respectivement deux variantes d'agencement du dispositif de l'invention entre le bras de suspension et la caisse du véhicule, et
- la figure 11 est un graphe illustrant la progressivité obtenue par un système de suspension pourvu d'un dispositif de l'invention comparée à celle donnée par un système de suspension de l'art antérieur.

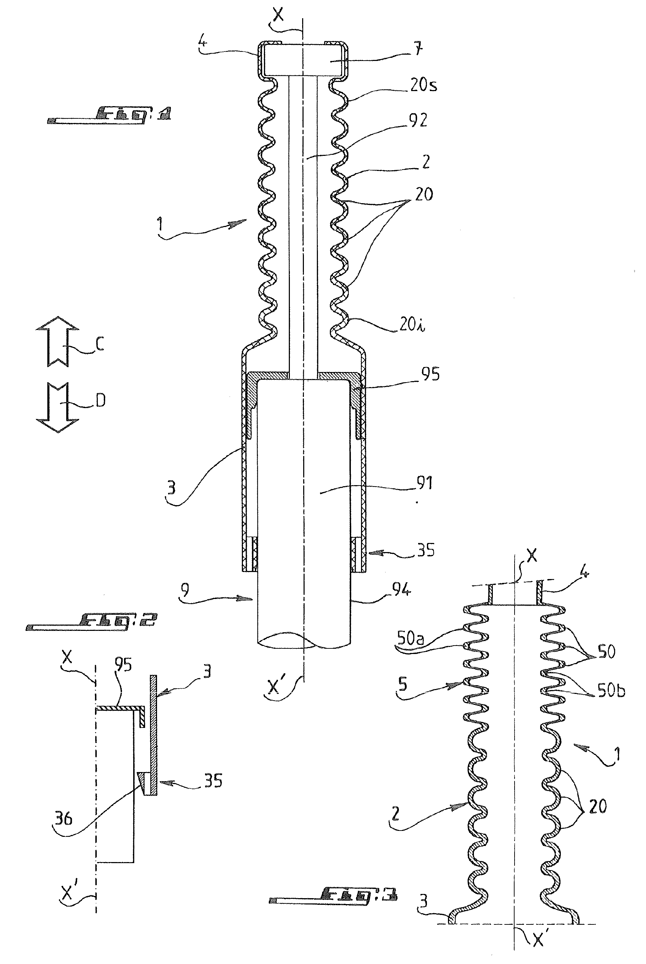

En référence au dessin de la figure 1, on a représenté un dispositif de butée 1 de limitation de course selon l'invention, dans un amortisseur 9 d'un système de suspension pour véhicule.

Conformément à l'invention, ce dispositif de butée 1 est constitué par une seule pièce de révolution, d'axe XX', décrite ci-dessous.

Ce dispositif 1 comprend une partie 2, désignée « partie de butée », qui présente des ondulations ou plis successifs, et qui assure essentiellement la fonction de butée d'attaque et de butée de détente. Cette partie de butée 2 est ainsi composée d'une succession de plis 20 qui présentent, en coupe longitudinale, une forme générale en « U » ; la base arrondie du U étant disposée le plus éloignée de l'axe XX'. Avantageusement, l'épaisseur des plis 20 décroît d'une extrémité à l'autre de la partie de butée 2. Comme illustré en figure 1, le pli d'extrémité inférieur 20i, du côté de l'amortisseur 9, est plus épais que le pli d'extrémité supérieure 20s. En outre, la forme des plis 20 peut également changer entre ces deux extrémités. Les plis 20 autorisent la déformation du dispositif de butée 1 de limitation de course en compression (sens de la flèche C) et en détente (sens de la flèche D).

En compression (sens de la flèche C), le corps d'amortisseur 91 coulisse sur la tige d'amortisseur 92. La partie de butée 2 est alors comprimée entre le corps d'amortisseur 91 et l'appui supérieur 7 (lié à la caisse du véhicule non représentée) de la tige 92 du système d'amortisseur 9. Les plis 20 s'empilent et travaillent en compression. La forme variable et/ou l'épaisseur variable des plis 20 assurent la progressivité recherchée de l'effort de butée d'attaque et de détente, cette progressivité étant un important facteur du bon « ressenti » de suspension par le conducteur.

Le dispositif de butée 1 comprend également une partie inférieure 3 qui relie la partie de butée 2 au corps d'amortisseur 91, et une partie supérieure 4 qui relie la partie de butée 2 à la caisse du véhicule. Autour de la position de référence - ou position de repos de l'amortisseur -, la partie inférieure 3, de forme générale cylindrique, coulisse le long de la paroi externe 94 du corps d'amortisseur 3 et, de cette manière, assure une fonction de protection de la tige d'amortisseur 92 lors de ses déplacements. Pour des petits déplacements autour de la position de référence, aucune raideur n'est apportée par le dispositif de butée 1 dans son ensemble.

En détente (sens de la flèche D), la partie inférieure 3 du dispositif de butée coulisse le long de la paroi externe 94 du corps d'amortisseur 91 jusqu'à ce que sa partie d'extrémité 35 soit arrêtée par un arrêtoir 95 monté fixe sur le corps d'amortisseur 91. Le dispositif de butée 1 étant fixé à sa partie supérieure 4 à l'appui supérieur 7, la partie de butée 2 du dispositif 1 travaille alors en détente, c'est-à-dire en traction. La forme variable et/ou l'épaisseur variable des plis 20 assurent la progressivité recherchée de l'effort de butée de détente.

De manière préférentielle, le matériau qui compose le dispositif de butée 1 de l'invention doit permettre de travailler sous forte sollicitation de compression (en phase d'attaque), mais aussi sous forte sollicitation de traction (en phase de détente). A cette fin, le matériau employé peut avantageusement être un élastomère thermoplastique, dont la dureté mesurée en essai « Shore » du matériau doit être comprise entre 30D et 80D.

Pour assurer le montage du dispositif de butée 1 sur le corps d'amortisseur 91 lors de la première compression et éviter son déboîtement en détente en usage, la partie d'extrémité 35 de la partie inférieure 3 peut présenter une forme conique 36, comme cela est représenté sur le dessin de la figure 2.

La tige d'amortisseur 92 est entourée sur toute sa longueur, et par conséquent protégée par le dispositif de butée 1.

Le dispositif décrit ci-dessus remplit ainsi trois fonctions : une fonction de butée d'attaque, une fonction de butée de détente et une fonction de protection de la tige d'amortisseur 92.

En référence aux dessins des figures 3 à 6, on va maintenant décrire un autre mode de réalisation du dispositif de butée 1 de limitation de course pour amortisseur conforme à l'invention. Dans ces figures et celles qui suivent, les éléments identiques aux éléments des figures 1 et 2 sont désignés par les mêmes références numériques.

Le dispositif de butée 1 est composé aussi d'une seule pièce de révolution, d'axe XX', et assure également les trois fonctions mentionnées ci-dessus.

La figure 3 représente partiellement le dispositif de butée 1 selon cet autre mode de réalisation. La partie de butée 2 est semblable à la partie de butée telle que décrite ci-dessus et assure essentiellement la fonction de butée d'attaque et de butée de détente.

Le dispositif de butée 1 comporte en outre une partie formant soufflet 5, disposée entre la partie supérieure 4 et la partie de butée 2 dudit dispositif 1.

Le soufflet 5 présente une forme ondulée et se compose ainsi d'une succession de plis 50 ; la forme et/ou l'épaisseur des plis 50 du soufflet 5 étant distinctes de celles des plis 20 de la partie de butée 2. Les plis 50 du soufflet 5 présentent avantageusement, en coupe longitudinale, une forme générale de « V » ou de créneau.

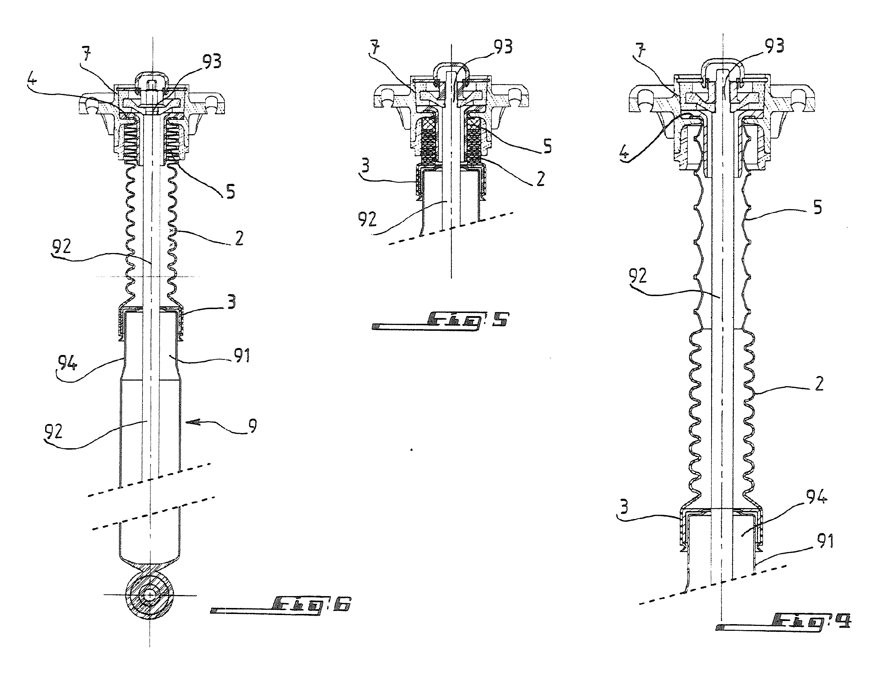

Les formes et/ou l'épaisseur des plis 50 sont telles que, en partant de la phase de repos représenté en figure 6 :
- lors d'une phase de compression illustrée en figure 5, le soufflet 5 se comprime en premier, et ensuite la partie de butée 2 se comprime pour assurer l'amortissement en attaque ;
- lors d'une phase de détente illustrée en figure 4, le soufflet 5 s'étire en traction en premier, et ensuite la partie de butée 2 se détend et s'étire en traction pour assurer la fonction de butée en détente.

De manière générale, le soufflet 5 est moins raide en traction et en compression que la partie de butée 2. Le soufflet 5 assure la fonction de protection de la tige d'amortisseur 92 pour tous les débattements de l'amortisseur. L'épaisseur des plis 50 du soufflet 5 est faible, de façon à obtenir une raideur faible sur les petits déplacements du soufflet 5. Les sommets 50a et les pieds 50b (référencés sur la figure 3) des plis 50 du soufflet 5 sont relativement épais pour éviter la déformation des plis 50 lors des sollicitations en traction (position de la figure 4). En phase de compression, comme représenté sur le dessin de la figure 5, les plis 50 du soufflet 5 peuvent « s'empiler » les uns sur les autres de manière à former un appui indéformable pour reprendre les efforts de compression de la partie de butée 2.

En outre, les plis 20 peuvent être d'épaisseur supérieure aux plis 50.

La fonction de butée de détente est assurée lorsque :
- la partie d'extrémité supérieure 4 du dispositif de butée 1 est solidaire de l'extrémité supérieure 93 de la tige d'amortisseur 92 côté caisse ou directement du dispositif de fixation supérieure 7 de l'amortisseur 9 sur la caisse (voir figures 4 à 6) ; et
- la partie d'extrémité inférieure 3 du dispositif de butée 1 est solidaire du corps d'amortisseur 91.

En référence encore aux figures 4 à 6, la partie inférieure 3 assure la fixation du dispositif de butée 1 sur la paroi externe 94 du corps d'amortisseur 91.

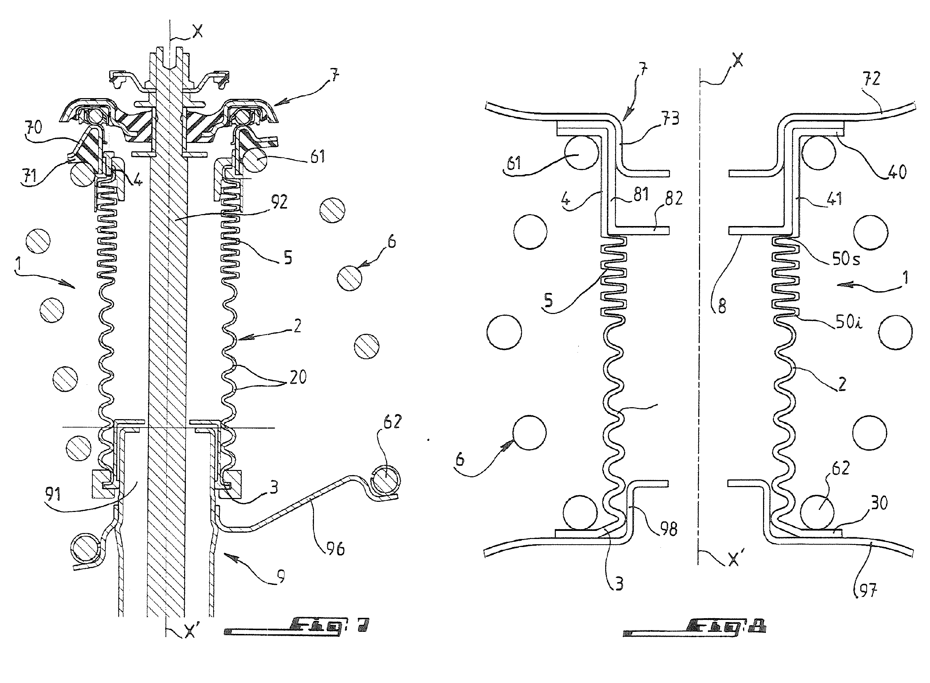

Les figures 7 à 10 présentent quatre agencements du dispositif de butée 1 selon l'invention dans un système de suspension comprenant un amortisseur 9 et un ressort de suspension 6 monté autour dudit amortisseur 9, par exemple dans une application à un train avant de véhicule automobile de type pseudo Mac Pherson.

Dans ces quatre variantes de réalisation, la partie de butée 2 du dispositif de butée 1 est disposée partiellement autour de la partie supérieure du corps d'amortisseur de façon que la cote écrasée du dispositif de butée 1 n'intervienne pas dans l'empilage appui supérieur 4 / ressort de suspension 6 / amortisseur. Ainsi, dans cet agencement particulier, le corps d'amortisseur 91 s'étend partiellement à l'intérieur de la partie de butée 2 et de ses plis 20 ; la partie inférieure 3 étant montée fixe par rapport au corps d'amortisseur 91.

Comme décrit précédemment, la fonction de protection de la tige d'amortisseur 2 est assurée en partie par le soufflet 5 et la fonction de butée de limitation de course (butée d'attaque et butée de détente) est assurée par la partie de butée 2.

Dans la première variante représentée en figure 7, le ressort de suspension 6 présente une spire supérieure 61 en butée sur le dispositif de fixation supérieure 7 (correspondant à l'appui supérieur de la tige) de l'amortisseur 9 sur la caisse du véhicule, et plus particulièrement sur une coupelle d'appui 70. La filtration des vibrations du ressort 61 sur le dispositif de fixation 7 est assurée par une masse de matériau élastique 71, notamment de matériau élastomère, entre la spire supérieure 61 et la coupelle 70. Le ressort 6 présente une spire inférieure 62 en appui sur une coupelle 96 solidaire du corps d'amortisseur 91. La partie supérieure 4 et la partie inférieure 3 sont solidaires respectivement du dispositif de fixation 7 et du corps d'amortisseur 91.

Dans les variantes représentées aux figures 8, 9 et 10, les parties supérieure 4 et inférieure 3 du dispositif de butée 1 présentent chacune à leur extrémité libre une collerette 30, 40 en saillie radiale.

La partie supérieure 4 est montée fixe sur une coupelle supérieure 72 du dispositif de fixation 7 qui comporte une paroi latérale cylindrique 73 centrée sur l'axe XX' et saillant à l'intérieur du dispositif de butée 1. Cette paroi cylindrique 73 présente une ouverture destinée au passage de la tige pour sa fixation sur la caisse et participe au centrage des éléments de suspension, à savoir le ressort de suspension 6, l'amortisseur 9 et le dispositif de butée 1 selon l'invention. En l'occurrence, la collerette 40 vient en appui sur ladite coupelle supérieure 72 et est centrée sur la paroi cylindrique 73. En outre, la partie supérieure 4 présente une portion cylindrique 41 qui est montée autour de cette paroi cylindrique 73.

La partie inférieure 3 est montée fixe sur une coupelle inférieure 97 solidaire du corps d'amortisseur qui comporte une paroi latérale cylindrique 98 centrée sur l'axe XX' et saillant à l'intérieur de la partie de butée 2. Cette paroi cylindrique 98 présente une ouverture destinée au passage de la tige et participe au centrage du dispositif de butée 1 selon l'invention. De la sorte, la partie de butée 2 du dispositif de butée 1 est disposée partiellement autour de cette paroi cylindrique 98 solidaire du corps d'amortisseur. La collerette 30 vient en appui sur cette coupelle inférieure 97 et est centrée sur sa paroi cylindrique 98.

Dans ces divers agencements, le dispositif de butée 1 assure la filtration des vibrations du ressort de suspension 6 qui est monté entre les collerettes inférieure 97 et supérieure 72. En effet, la spire supérieure 61 du ressort 6 est en appui sur la collerette 40 de la partie supérieure 4 du dispositif de butée 1, et la spire inférieure 62 du ressort 6 est en appui sur la collerette 30 de la partie inférieure 3 du dispositif de butée 1.

Un support intermédiaire 8 peut être ajouté côté caisse (c'est-à-dire du côté de la coupelle supérieure 72) ou côté corps d'amortisseur (c'est-à-dire du côté de la coupelle inférieure 97) pour ajuster la différence de hauteur entre le ressort 6 et le dispositif de butée 1.

Dans la variante de réalisation représentée en figure 8, le support intermédiaire 8 est disposé entre la partie supérieure 4 du dispositif 1 et la coupelle supérieure 72 ; le ressort 6 venant en appui directement sur la collerette 40. Le support intermédiaire 8 présente une section cylindrique 81 montée autour de la paroi 73 et qui est complètement entourée par la portion cylindrique 41 de la partie supérieure 4. Le soufflet 5 présente un diamètre interne inférieur au diamètre externe de cette section cylindrique 81, de sorte que le pli d'extrémité supérieure 50s du soufflet 5 soit en butée contre ledit support 8. Lors d'une phase d'attaque, le soufflet 5 se comprime contre ce support 8 pour former un appui indéformable.

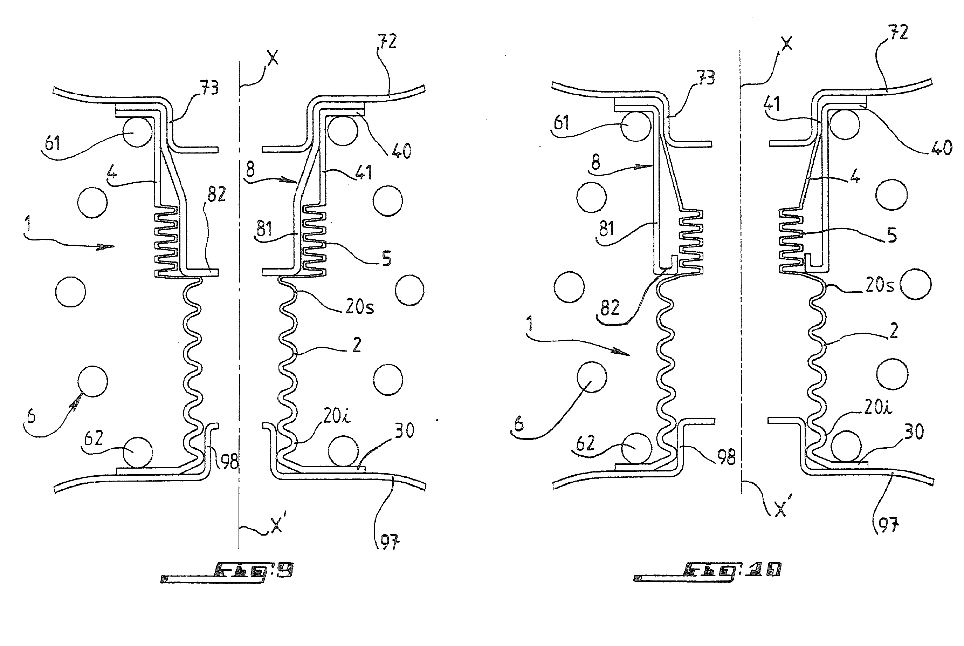

Dans la variante de réalisation représentée en figure 9, le support intermédiaire 8 est également disposé entre la partie supérieure 4 du dispositif 1 et la coupelle supérieure 72 ; le ressort 6 venant en appui directement sur la collerette 40. Le support intermédiaire 8 est entouré par la partie supérieure 4 et également par le soufflet 5. Le support intermédiaire 8 présente, à son extrémité opposée à la caisse, une section cylindrique 81, entourée par le soufflet 5, qui se termine par un rebord 82. La partie de butée 2 présente un diamètre interne inférieur au diamètre externe de cette section cylindrique 81, de sorte que le pli d'extrémité supérieure 20s de la partie de butée 2 soit en butée contre ledit support 8, et en particulier contre son rebord 82. Lors d'une phase d'attaque, le soufflet 5 n'est donc pas sollicité en compression et seule la partie de butée 2 se comprime contre ce support 8.

Dans la variante de réalisation représentée en figure 10, le support intermédiaire 8 est disposé entre la partie supérieure 4 et le ressort de suspension 6 ; le ressort 6 venant en appui directement sur ce support 8. Le support intermédiaire 8 entoure la partie supérieure 4 et également le soufflet 5. Le support intermédiaire 8 présente une section cylindrique 81, entourée par le soufflet 5, qui se termine par un rebord 82. La partie de butée 2 présente des dimensions telles que son pli d'extrémité supérieure 20s soit en butée contre ledit support 8, et en particulier contre son rebord 82. Lors d'une phase d'attaque, le soufflet 5 n'est donc pas sollicité en compression et seule la partie de butée 2 se comprime contre ce support 8.

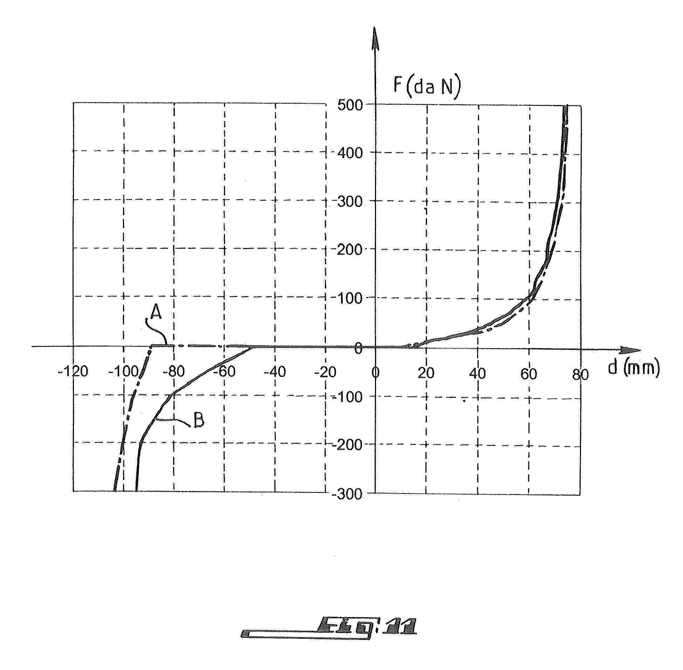

Le graphe de la figure 11 est un exemple de courbe de saturation accessible pour un système de suspension incluant un dispositif de butée selon la présente invention (courbe référencée B en trait plein) comparée à celle d'un système de suspension conforme à l'art antérieur (courbe référencée A en trait interrompu mixte). La courbe B montre une meilleure progressivité des efforts en détente, c'est-à-dire une réelle courbure dans la partie gauche de la courbe où sont représentées les variations des efforts en détente en fonction des déplacements.

La présente invention présente de nombreux avantages, parmi lesquels les avantages suivants :
- elle permet d'assurer trois fonctions avec une pièce mécanique unique, réduisant ainsi le coût de la solution technique apportée par rapport aux dispositifs et systèmes de l'art antérieur, qui tous requièrent plusieurs pièces et une opération d'assemblage entre ces dernières,
- elle est de réalisation simple et économique, parce qu'elle est obtenue à partir d'un élastomère thermoplastique du type polyester, selon un procédé de type extrusion/soufflage ou injection/soufflage,
- elle permet une saturation progressive des raideurs en attaque comme en détente, tout en conservant une raideur nulle autour d'une position de référence.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de butée de limitation de course (1) d'une suspension de véhicule, ladite suspension comportant un amortisseur (9) qui comprend une tige (92) montée coulissante dans un corps d'amortisseur (91), **caractérisé en ce qu'**il est constitué par une pièce unique, de révolution, comprenant :
- une partie d'extrémité supérieure (4) destinée à être fixée à un appui supérieur (7) de la tige (92),
- une partie de butée (2) composée d'une succession de plis (20), agencés de façon à pouvoir fonctionner en compression pour assurer une fonction de butée d'attaque et en traction pour assurer une fonction de butée de détente,
- une partie de protection (3, 5) agencée de façon à permettre à la tige (92) de coulisser avant de faire fonctionner la partie de butée (2) en traction ou en compression,
- une partie d'extrémité inférieure (35, 30) destinée à être liée au corps d'amortisseur (91) et à fournir une fixation à ladite pièce unique de façon à permettre la fonction de butée de détente.

2. Dispositif (1) selon la revendication 1, **caractérisé en ce que** les plis (20) de la partie de butée (2) présentent, en coupe longitudinale, une forme générale de « U ».

3. Dispositif (1) selon la revendication 1 ou 2, **caractérisé en ce que** l'épaisseur des plis (20) de la partie de butée (2) décroît d'une extrémité à l'autre de la partie de butée (2).

4. Dispositif (1) selon l'une quelconque des revendications 1 à 3, **caractérisé en ce que** la forme des plis (20) de la partie de butée (2) varie d'une extrémité à l'autre de la partie de butée (2).

5. Dispositif (1) selon l'une quelconque des revendications 1 à 4, **caractérisé en ce que** le matériau qui compose le dispositif (1) est un élastomère thermoplastique.

6. Dispositif (1) selon l'une quelconque des revendications 1 à 5, **caractérisé en ce que** le matériau qui compose le dispositif (1) présente une dureté « shore » comprise entre 30D et 80D.

7. Dispositif (1) selon l'une quelconque des revendications 1 à 6, **caractérisé en ce qu'**il est obtenu par un procédé de moulage, ou par un procédé de type extrusion/soufflage ou un procédé de type injection/soufflage.

8. Dispositif (1) selon l'une quelconque des revendications 1 à 7, **caractérisé en ce que** la partie inférieure (3) est de forme cylindrique afin de pouvoir coulisser sur la paroi externe (94) du corps d'amortisseur (91) et présente une butée de limitation de la course (95, 30) de coulissement en détente.

9. Dispositif (1) selon la revendication 8, **caractérisé en ce que** ladite butée de limitation de la course de coulissement est formée par un rebord radial interne de l'extrémité (30) de la partie inférieure (3) qui est destinée à venir en butée contre un arrêtoir (95) monté fixe sur le corps d'amortisseur (91).

10. Dispositif (1) selon la revendication 9, **caractérisé en ce que** ledit rebord radial interne présente une section conique (36), de manière à assurer le montage sur le corps d'amortisseur (91) lors de la première compression et éviter le déboîtement de la partie inférieure (3) en détente.

11. Dispositif (1) selon l'une quelconque des revendications 1 à 7, **caractérisé en ce qu'**il comprend en outre une partie formant soufflet (5), disposé entre la partie supérieure (4) et la partie de butée (2), afin d'assurer une fonction de protection de la tige d'amortisseur (92).

12. Dispositif (1) selon la revendication 11, **caractérisé en ce que** le soufflet (5) est composé d'une succession de plis (50) et présente une raideur en traction et en compression inférieure à celles de la partie de butée (2).

13. Dispositif (1) selon la revendication 12, **caractérisé en ce que** les plis (50) du soufflet (5) présentent, en coupe longitudinale, une forme générale de « V » ou de créneau.

14. Dispositif (1) selon la revendication 12 ou 13, **caractérisé en ce que** l'épaisseur des plis (50) du soufflet (5) est inférieure à l'épaisseur des plis (20) de la partie de butée (2).

15. Dispositif selon l'une quelconque des revendications 11 à 14, **caractérisé en ce que** les plis (50) du soufflet (5) sont de faible épaisseur, de façon à obtenir une raideur faible sur les petits déplacements du soufflet (5), et **en ce que** les sommets (5a) et les pieds (5b) de ces plis (50) sont relativement épais pour éviter la déformation des spires lors des sollicitations en traction.

16. Dispositif (1) selon l'une quelconque des revendications 11 à 15, **caractérisé en ce que** la partie inférieure (3) présente une forme cylindrique destinée à être engagée et fixée solidairement sur le corps d'amortisseur (91).

17. Dispositif (1) selon l'une quelconque des revendications 11 à 16, **caractérisé en ce que** la partie supérieure (4) du dispositif (1) est destinée à être solidairement fixée sur l'appui supérieur (7) de la tige (92) de l'amortisseur (9).

18. Système de suspension, qui comprend un amortisseur (9) composé d'un corps d'amortisseur (91) dans lequel coulisse une tige d'amortisseur (92), et un ressort de suspension (6) monté autour dudit amortisseur (9), **caractérisé en ce qu'**il comprend, de plus, un dispositif de butée de limitation de course (1) conforme à l'une quelconque des revendications précédentes.

19. Système de suspension selon la revendication 9 en dépendance de l'une quelconque des revendications 11 à 17, **caractérisé en ce que** ledit dispositif de butée de limitation de course (1) est placé partiellement autour du corps d'amortisseur (91), de façon que la cote écrasée du dispositif de butée (1) n'intervienne pas dans l'empilage appui supérieur (7) / ressort de suspension (6) / amortisseur (9).

20. Système selon la revendication 19, **caractérisé en ce que** les parties supérieure (4) et inférieure (3) du dispositif de butée (1) présentent chacune à leur extrémité libre une collerette (40, 30) en saillie radiale, en appui respectivement sur l'appui supérieur (7) et le corps d'amortisseur (91), et **en ce que** le ressort (6) est monté entre les deux dites collerettes (40, 30) de sorte que le dispositif de butée (1) filtre les vibrations dudit ressort (6).

21. Système selon la revendication 19 ou 20, **caractérisé en ce qu'**il comporte un support intermédiaire (8) pour ajuster la différence de hauteur entre le ressort d'amortisseur (6) et le dispositif de butée de limitation de course (1).

22. Système selon la revendication 21, **caractérisé en ce que** l'un des plis d'extrémité (50s, 50i) du soufflet (5) prend appui contre ledit support intermédiaire (8).

23. Système selon la revendication 21, **caractérisé en ce que** l'un des plis d'extrémité (20s, 20i) de la partie de butée (2) du dispositif de butée (1) prend appui contre ledit support intermédiaire (8).

24. Système selon la revendication 23, **caractérisé en ce que** le soufflet (5) est placé à l'intérieur ou l'extérieur dudit support intermédiaire (8).
